# EUROPEAN PATENT APPLICATION

(11) **EP 4 129 713 A1**
(43) Date of publication of application: **08.02.2023**
(21) Application number: 21776522.1
(22) Date of filing: 10.03.2021
(51) Int. Cl.: B60C 1/00, C08L 7/00, C08L 9/00, C08K 3/04

(54) **RUBBER COMPOSITION AND TIRE**

(30) Priority: 23.03.2020 JP 2020051631
(71) Applicant: BRIDGESTONE CORPORATION, Chuo-ku Tokyo 104-8340 (JP)
(72) Inventor: MITO, Kei, Tokyo 104-8340 (JP); MIYAZAKI, Toru, Tokyo 104-8340 (JP)
(74) Representative: Marks & Clerk LLP
(86) International application number: PCT/JP2021/009642
(87) International publication number: WO 2021/193076

(57) **Abstract**

Provided is a rubber composition having excellent wear resistance while having good low heat generating properties. The rubber composition contains a rubber component and carbon black, where the rubber component contains natural rubber and butadiene rubber, a proportion of the natural rubber is less than 80 % by mass, a content of the carbon black is 40 parts by mass or more and 100 parts by mass or less with respect to 100 parts by mass of the rubber component, and when carbon blacks A, B and C are defined under predetermined conditions, the carbon black contains at least the carbon black A and the carbon black B, and a content of the carbon black C is 0 or the smallest among the carbon blacks A to C.

## Description

### TECHNICAL FIELD

This disclosure relates to a rubber composition and a tire.

### BACKGROUND

The demand for wear resistance of rubber articles such as tires is increasing year by year. A method of blending a large amount of carbon black in a rubber composition used for the rubber article, and a method of reducing the particle size of carbon black to be blended in a rubber composition, for example, have been studied as methods to improve the wear resistance.

However, the above methods have a problem of causing deterioration of low heat generating properties. Because there is generally antinomy between wear resistance and low heat generating properties, it has been desired to develop a technique capable of achieving both of these performances at a high level.

For example, JP 2015-164985 A (PTL 1) describes that, by using two types of carbon black and keeping the nitrogen adsorption specific surface area, compressed dibutyl phthalate absorption amount, iodine adsorption amount, and the like of these within predetermined ranges, it is possible to improve low heat generating properties while ensuring excellent wear resistance.

### CITATION LIST

### Patent Literature

PTL 1: JP 2015-164985 A

### SUMMARY

### (Technical Problem)

However, it cannot be said that the technique described in PTL 1 provides sufficient performance, and it is still being required to achieve both low heat generating properties and wear resistance at a higher level.

It could thus be helpful to provide a rubber composition having excellent wear resistance while having good low heat generating properties. It is helpful to provide a tire with excellent low heat generating properties and wear resistance.

### (Solution to Problem)

We thus provide the following.

The rubber composition of the present disclosure is a rubber composition containing a rubber component and carbon black, where
the rubber component contains natural rubber and butadiene rubber, and a proportion of the natural rubber is less than 80 % by mass,
a content of the carbon black is 40 parts by mass or more and 100 parts by mass or less with respect to 100 parts by mass of the rubber component, and
when carbon black having a nitrogen adsorption specific surface area of 125 m²/g or more and 200 m²/g or less and a toluene coloring transmittance of 80 % or more is defined as carbon black A,
carbon black having a nitrogen adsorption specific surface area of 90 m²/g or more and 124 m²/g or less is defined as carbon black B, and
carbon black other than carbon black A and carbon black B is defined as carbon black C,
the carbon black contains at least the carbon black A and the carbon black B, and a content of the carbon black C is 0 or the smallest among the carbon blacks A to C.

The tire of the present disclosure uses the above-described rubber composition.

### (Advantageous Effect)

According to the present disclosure, it is possible to provide a rubber composition having excellent wear resistance while having good low heat generating properties. Further, according to the present disclosure, it is possible to provide a tire with excellent low heat generating properties and wear resistance.

### DETAILED DESCRIPTION

The following describes the rubber composition and the tire of the present disclosure in detail based on embodiments.

### <Rubber composition>

A rubber composition of one embodiment of the present disclosure (hereinafter, it may be referred to as "rubber composition of the present embodiment") contains a rubber component and carbon black. The rubber component in the rubber composition of the present embodiment contains natural rubber and butadiene rubber, and the proportion of the natural rubber is less than 80 % by mass. In the rubber composition of the present embodiment, the content of the carbon black is 40 parts by mass or more and 100 parts by mass or less with respect to 100 parts by mass of the rubber component.

In the rubber composition of the present embodiment, when carbon black having a nitrogen adsorption specific surface area (N₂SA) of 125 m²/g or more and 200 m²/g or less and a toluene coloring transmittance of 80 % or more is defined as carbon black A, carbon black having a nitrogen adsorption specific surface area of 90 m²/g or more and 124 m²/g or less is defined as carbon black B, and carbon black other than carbon black A and carbon black B is defined as carbon black C, the above-mentioned carbon black contains at least the carbon black A and the carbon black B, and the content of the carbon black C is 0 or the smallest among the carbon blacks A to C.

In the rubber composition of the present embodiment, the rubber component and at least two types of carbon black are optimized as described above. As a result, the rubber composition obtains excellent wear resistance while having good low heat generating properties.

In the present specification, the nitrogen adsorption specific surface area of carbon black is measured in accordance with JIS K6217-2.

In the present specification, the toluene coloring transmittance of carbon black is measured in accordance with JIS K6218-4.

The rubber composition of the present embodiment does not contain wet masterbatch, coating filler, or the like.

### (Rubber component)

The rubber component in the rubber composition of the present embodiment needs to contain at least natural rubber (NR) and butadiene rubber (BR). In this case, the wear resistance of the rubber composition of the present embodiment can be improved.

The proportion of natural rubber in the rubber component is less than 80 % by mass. When the proportion of natural rubber is 80 % by mass or more, the wear resistance may deteriorate. From the same viewpoint, the proportion of natural rubber in the rubber component is preferably 75 % by mass or less. The proportion of natural rubber in the rubber component is more preferably 70 % by mass or less.

The proportion of butadiene rubber in the rubber component is more than 20 % by mass. When the proportion of butadiene rubber is 20 % by mass or less, the effect of improving wear resistance cannot be sufficiently obtained. From the same viewpoint, the proportion of butadiene rubber in the rubber component is preferably 25 % by mass or more. The proportion of butadiene rubber in the rubber component is more preferably 30 % by mass or more.

The rubber component in the rubber composition of the present embodiment may contain a rubber component other than natural rubber and butadiene rubber. Examples of the rubber component other than natural rubber and butadiene rubber include isoprene rubber (IR), styrene-butadiene rubber (SBR), ethylene-propylene-diene rubber (EPDM), chloroprene rubber (CR), halogenated butyl rubber, and acrylonitrile-butadiene rubber (NBR). These rubber components may be used alone or in combination of two or more. However, the rubber component is preferably composed only of natural rubber and butadiene rubber from the viewpoint of improving wear resistance and low heat generating properties in a well-balanced manner.

### (Carbon black)

As described above, the rubber composition of the present embodiment contains the black A, which is carbon black having a nitrogen adsorption specific surface area of 125 m²/g or more and 200 m²/g or less and a toluene coloring transmittance of 80 % or more, as an essential component. In other words, the carbon black in the rubber composition of the present embodiment contains at least the carbon black A. The carbon black A may be used alone or in combination of two or more.

As used herein, setting the nitrogen adsorption specific surface area of the carbon black A to 125 m²/g or more is to effectively improve the wear resistance of the rubber composition of the present embodiment by using such carbon black A in combination with the carbon black B described later. Further, setting the nitrogen adsorption specific surface area of the carbon black A to 200 m²/g or less is to maintain good low heat generating properties of the rubber composition of the present embodiment. From the same viewpoint, the nitrogen adsorption specific surface area of the carbon black corresponding to the carbon black A used in the present embodiment is preferably 130 m²/g or more. Further, it is preferably 160 m²/g or less and more preferably 145 m²/g or less.

Further, setting the toluene coloring transmittance of the carbon black A to 80 % or more is to effectively improve the wear resistance while maintaining good low heat generating properties of the rubber composition of the present embodiment by using such carbon black A in combination with the carbon black B described later. From the same viewpoint, the toluene coloring transmittance of the carbon black corresponding to the carbon black A used in the present embodiment is preferably 83 % or more, more preferably 85 % or more, and still more preferably 90 % or more.

As described above, the rubber composition of the present embodiment contains the carbon black B, which is carbon black having a nitrogen adsorption specific surface area of 90 m²/g or more and 124 m²/g or less, as an essential component. In other words, the carbon black in the rubber composition of the present embodiment contains at least the carbon black B. The carbon black B may be used alone or in combination of two or more.

As used herein, setting the nitrogen adsorption specific surface area of the carbon black B to 90 m²/g or more is to effectively improve the wear resistance of the rubber composition of the present embodiment by using such carbon black B in combination with the carbon black A described above. Further, setting the nitrogen adsorption specific surface area of the carbon black B to 124 m²/g or less is to maintain good low heat generating properties of the rubber composition of the present embodiment. From the same viewpoint, the nitrogen adsorption specific surface area of the carbon black corresponding to the carbon black B used in the present embodiment is preferably 100 m²/g or more. Further, it is preferably 120 m²/g or less.

The toluene coloring transmittance of the carbon black corresponding to the carbon black B used in the present embodiment is not particularly limited, but it is preferably 70 % or more from the viewpoint of further improving the wear resistance.

In the rubber composition of the present embodiment, the ratio of the content of the carbon black A to the total content of the carbon black A and the carbon black B is preferably 30 % by mass or more, and it is preferably 70 % by mass or less. When the ratio is 30 % by mass or more, the wear resistance can be further improved. When the ratio is 70 % by mass or less, deterioration of the low heat generating properties can be suppressed more effectively. From the same viewpoint and from the viewpoint of improving the reinforcing properties and the dispersibility of polymer and carbon black, the ratio of the content of the carbon black A to the total content of the carbon black A and the carbon black B is more preferably 40 % by mass or more, still more preferably 50 % by mass or more, and further preferably 55 % by mass or more. Further, it is more preferably 60 % by mass or less.

The rubber composition of the present embodiment may or may not contain carbon black other than the above-described carbon black A and carbon black B, that is, carbon black C (the content may be 0). Examples of the carbon black C include carbon black having a nitrogen adsorption specific surface area of more than 200 m²/g, carbon black having a nitrogen adsorption specific surface area of less than 90 m²/g, carbon black having a nitrogen adsorption specific surface area of 125 m²/g or more and 200 m²/g or less but a toluene coloring transmittance of less than 80 %.

When the rubber composition of the present embodiment contains the carbon black C, the content of the carbon black C needs to be the smallest among the carbon blacks A to C. In other words, when the rubber composition of the present embodiment contains the carbon black C, it is required that the content of the carbon black C should be less than the content of the carbon black A and less than the content of the carbon black B. This is to ensure that the effect of using a combination of carbon black A and carbon black B is exhibited. From the same viewpoint, the rubber composition of the present embodiment preferably contains no carbon black C (that is, the carbon black consists only of the carbon black A and the carbon black B).

The rubber composition of the present embodiment has a carbon black content (that is, a total content of the carbon black A, the carbon black B, and any carbon black C) of 40 parts by mass or more and 100 parts by mass or less with respect to 100 parts by mass of the rubber component. When the content is less than 40 parts by mass, the effect of using a combination of carbon black A and carbon black B is not sufficiently exhibited, and the low heat generating properties and the wear resistance cannot be improved in a well-balanced manner. Further, when the content exceeds 100 parts by mass, the low heat generating properties deteriorate. From the viewpoint of further improving the low heat generating properties and the wear resistance in a well-balanced manner, the content of the carbon black in the rubber composition of the present embodiment is preferably 50 parts by mass or more, and it is preferably 65 parts by mass or less.

### (Other components)

In addition to the above, the rubber composition of the present embodiment may appropriately contain various compounding agents such as filler other than carbon black, a vulcanizing agent such as sulfur, a vulcanizing co-agent such as stearic acid, a vulcanization accelerator, a vulcanization accelerating aid such as zinc oxide, an age resistor, a softener, a plasticizer, and a processability improver, as long as the effects are not impaired. However, from the viewpoint of improving the low heat generating properties and the wear resistance in a well-balanced manner, the content of the softener and the plasticizer is preferably 10 parts by mass or less, more preferably 5 parts by mass or less, and still more preferably substantially not contained.

A method of preparing the rubber composition of the present embodiment is not particularly limited. For example, the rubber composition of the present embodiment can be obtained by blending and kneading components including the above-described rubber component and carbon black according to a conventional method. During the blending and kneading, all the components may be blended and kneaded at one time, or each component may be blended and kneaded in multiple stages such as two stages or three stages. During the kneading, a kneading machine such as a roll, an internal mixer, and a Banbury rotor may be used. Further, the rubber composition of the present embodiment may be a crosslinked product (vulcanized product).

### <Tire>

A tire of one embodiment of the present disclosure (hereinafter, may be referred to as "tire of the present embodiment") uses the above-described rubber composition. In other words, the tire of the present embodiment contains the above-described rubber composition. Because the tire of the present embodiment includes the above-described rubber composition, it is excellent in low heat generating properties and wear resistance.

In one embodiment, the tire includes portions such as a tread, a base tread, a sidewall, side-reinforcing rubber, and bead filler. The above-described rubber composition can be used for at least one of the portions of the tire, and it is particularly preferable to use the above-described rubber composition for a tread that is further required to have both low heat generating properties and wear resistance.

As described above, the tire of the present embodiment is excellent in low heat generating properties and wear resistance, and therefore it can be preferably used as a pneumatic tire, especially a heavy-duty tire, a light truck tire, and the like.

The tire of the present embodiment is not particularly limited except that the above-described rubber composition is used, and it can be manufactured according to a conventional method. Further, in addition to normal air or air having an adjusted oxygen partial pressure, an inert gas such as nitrogen, argon or helium can be used as the gas to be filled in the tire of the present embodiment.

### EXAMPLES

The following describes the present disclosure in more detail with reference to examples, but the present disclosure is not limited to the following examples.

### (Preparation of rubber composition)

According to the composition listed in Table 1, primary kneading (non-productive kneading, NR) was performed, and then secondary kneading (productive kneading, P) was performed to prepare a rubber composition. The rubber composition was vulcanized at 145 °C for 33 minutes, and the low heat generating properties of the obtained sample of vulcanized rubber composition was evaluated as follows. Further, the wear resistance of the prepared rubber composition was evaluated as follows.

### <Low heat generating property>

The tan δ at 50 °C of the sample of the vulcanized rubber composition was measured at a frequency of 15 Hz and a strain of 1 % using a viscoelasticity meter (manufactured by GABO). With the measured value of tan δ in Comparative Example 4 being 100, the measured value of tan δ in each example was indicated as an index. The results are listed in Table 1. The smaller the index value is, the better the low heat generating properties are.

### <Wear resistance>

The prepared rubber composition is applied to a tread to prepare a test tire (size: 195/85R16) according to a conventional method. The test tire was arranged in an actual vehicle, the vehicle travels 10,000 km on a paved road surface, and the remaining groove depth is measured. With the index value of remaining groove depth in Comparative Example 4 being 100, the measured value of remaining groove depth in each example is indicated as an index. The results are listed in Table 1. The larger the index value is, the better the wear resistance is.

**Table 1**

| | | | Comparative Example 1 | Comparative Example 2 | Example 1 | Example 2 | Example 3 | Comparative Example 3 | Comparative Example 4 | Comparative Example 5 | Example 4 | Example 5 |
|---|---|---|---|---|---|---|---|---|---|---|---|---|
| NP | Natural rubber | Part by mass | 70 | 70 | 70 | 70 | 70 | 70 | 70 | 100 | 70 | 70 |
| | Butadiene rubber ∗ 1 | | 30 | 30 | 30 | 30 | 30 | 30 | 30 | 0 | 30 | 30 |
| | CB1 ∗2 (Carbon black B) | | 0 | 0 | 23 | 28 | 33 | 28 | 33 | 28 | 18 | 38 |
| | CB2 ∗3 (Carbon black A) | | 56 | 0 | 23 | 28 | 33 | 0 | 0 | 28 | 38 | 18 |
| | CB3 ∗4 | | 0 | 56 | 0 | 0 | 0 | 28 | 33 | 0 | 0 | 0 |
| | Stearic acid | | 2.0 | 2.0 | 2.0 | 2.0 | 2.0 | 2.0 | 2.0 | 2.0 | 2.0 | 2.0 |
| | Zinc oxide | | 1.0 | 1.0 | 1.0 | 1.0 | 1.0 | 1.0 | 1.0 | 1.0 | 1.0 | 1.0 |
| | Wax | | 1.0 | 1.0 | 1.0 | 1.0 | 1.0 | 1.0 | 1.0 | 1.0 | 1.0 | 1.0 |
| | Age resistor ∗5 | | 0.5 | 0.5 | 0.5 | 0.5 | 0.5 | 0.5 | 0.5 | 0.5 | 0.5 | 0.5 |
| P | Zinc oxide | | 2.5 | 2.5 | 2.5 | 2.5 | 2.5 | 2.5 | 2.5 | 2.5 | 2.5 | 2.5 |
| | Age resistor ∗5 | | 2.0 | 2.0 | 2.0 | 2.0 | 2.0 | 2.0 | 2.0 | 2.0 | 2.0 | 2.0 |
| | Vulcanization accelerator ∗6 | | 1.1 | 1.1 | 1.1 | 1.1 | 1.1 | 1.1 | 1.1 | 1.1 | 1.1 | 1.1 |
| | Sulfur | | 1.0 | 1.0 | 1.0 | 1.0 | 1.0 | 1.0 | 1.0 | 1.0 | 1.0 | 1.0 |
| Low heat generating property (tanδ at 50 °C) | | Index | 101 | 100 | 78 | 94 | 97 | 90 | 100 | 88 | 91 | 93 |
| Wear resistance | | Index | 90 | 89 | 112 | 116 | 116 | 95 | 100 | 88 | 116 | 118 |

| | | | | | | | | | | | | |
|---|---|---|---|---|---|---|---|---|---|---|---|---|
| ∗1 Butadiene rubber: manufactured by Ube Industries, Ltd., "UBEPOL BR150L" ∗2 CB1: manufactured by Cabot Corporation, "N234", N₂SA = 117 m²/g, toluene coloring transmittance: 80 % or more ∗3 CB2: manufactured by Asahi Carbon Co., Ltd., N₂SA = 139 m²/g, toluene coloring transmittance: 90 % ∗4 CB3: manufactured by Cabot Corporation, "Show Black S118", N₂SA = 144 m²/g, toluene coloring transmittance: 75 % ∗5 Age resistor: manufactured by Ouchi Shinko Chemical Industrial Co., Ltd., "NOCRAC 6C", N-(1,3-dimethylbutyl)-N'-phenyl-p-phenylenediamine ∗6 Vulcanization accelerator: manufactured by Ouchi Shinko Chemical Industrial Co., Ltd., "NOCCELER CZ-G", N-cyclohexyl-2-benzothiazolesulfenamide. | | | | | | | | | | | | |

According to Table 1, it is understood that, compared with the rubber compositions of Comparative Examples, the rubber compositions of Examples containing a rubber component containing natural rubber and butadiene rubber in a predetermined ratio, and a predetermined amount of carbon black A and carbon black B have both low heat generating properties and wear resistance improved in a well-balanced manner.

For CB3 in Table 1, the nitrogen adsorption specific surface area is 125 m²/g or more and 200 m²/g or less, but the toluene coloring transmittance is less than 80 %. According to Table 1, it is understood that, even if CB3 is used as one of the main raw materials, it does not contribute to well-balanced improvement of low heat generating properties and wear resistance.

### INDUSTRIAL APPLICABILITY

According to the present disclosure, it is possible to provide a rubber composition having excellent wear resistance while having good low heat generating properties. Further, according to the present disclosure, it is possible to provide a tire with excellent low heat generating properties and wear resistance.

## Claims

1. A rubber composition comprising a rubber component and carbon black, wherein
the rubber component comprises natural rubber and butadiene rubber, and a proportion of the natural rubber is less than 80 % by mass,
a content of the carbon black is 40 parts by mass or more and 100 parts by mass or less with respect to 100 parts by mass of the rubber component, and
when carbon black having a nitrogen adsorption specific surface area of 125 m²/g or more and 200 m²/g or less and a toluene coloring transmittance of 80 % or more is defined as carbon black A,
carbon black having a nitrogen adsorption specific surface area of 90 m²/g or more and 124 m²/g or less is defined as carbon black B, and
carbon black other than carbon black A and carbon black B is defined as carbon black C,
the carbon black comprises at least the carbon black A and the carbon black B, and a content of the carbon black C is 0 or the smallest among the carbon blacks A to C.

2. The rubber composition according to claim 1, wherein a content of the carbon black is 65 parts by mass or less with respect to 100 parts by mass of the rubber component.

3. The rubber composition according to claim 1 or 2, wherein a ratio of a content of the carbon black A to a total content of the carbon black A and the carbon black B is 30 % by mass or more and 70 % by mass or less.

4. A tire using the rubber composition according to any one of claims 1 to 3.
